# EUROPEAN PATENT APPLICATION

(11) **EP 2 556 869 A1**
(43) Date of publication of application: **13.02.2013**
(21) Application number: 12178877.2
(22) Date of filing: 01.08.2012
(51) Int. Cl.: A63H 13/00, A63H 3/28, A63H 3/48

(54) **Operable toy**

(30) Priority: 12.08.2011 JP 2011177239
(71) Applicant: Bandai Co., Ltd., Tokyo (JP)
(72) Inventor: Matsuno, Shotaro, Tokyo (JP)
(74) Representative: Hopkin, Tobias J.B.

(57) **Abstract**

An operable toy having a particular shape including the shape of a dog or a human is provided. The operable toy includes a body portion (120) including a sound output unit and having four limbs (131 - 134) movably attached thereto, a head portion (110) that is supported by a neck portion movably attached to the body portion, where the head portion (110) allows a mobile communication device to be fitted thereinto and supports the mobile communication device at a face position of the operable toy, and a transmission member (114) that transmits, to the sound output unit and a control unit mounted in the body portion (120), a signal output from the mobile communication device supported by the head portion (110) in accordance with a user input, where the control unit controls the operation of the four limbs (131 - 134) attached to the body portion (120).

## Description

### BACKGROUND OF THE INVENTION

### 1. Field of the Invention

The present invention relates to an operable toy.

### 2. Description of the Related Art

Doll toys that have four motor-manipulatable limbs and that allow a mobile communication device, such as a cell phone, to be connected thereto to control the four limbs have been developed (refer to, for example, Japanese Unexamined Patent Application Publication No. 2003-163725).

### SUMMARY OF THE INVENTION

However, the four limbs of the doll toy described in Japanese Unexamined Patent Application Publication No. 2003-163725 are manipulated by running an application program prestored in a cell phone. For example, the four limbs cannot be manipulated in response to voice interaction with a user. In addition, only the four limbs of a staffed doll toy are manipulated. The facial expressions cannot be provided and, therefore, the way of presentation is not very attractive. According, the motion of the doll toy is predetermined and, therefore, the entertainability of the doll is insufficient.

In addition, the doll toy described in Japanese Unexamined Patent Application Publication No. 2003-163725 is connected to an external communication connector of the cell phone and receives, from the cell phone, a signal used for operating the four limbs of the doll toy. Thus, the doll toy needs to have an interface to be connected to the external communication connector of a cell phone. Therefore, the manufacturing cost of the doll toy is disadvantageously increased.

Accordingly, the present invention provides an operable toy that provides high entertainability at low cost.

According to an embodiment of the present invention, an operable toy having a particular shape including the shape of a dog or a human is provided. The operable toy includes a body portion having a limb movably attached thereto, a head portion supported by a neck portion movably attached to the body portion, where the head portion allows a communication device including a display unit to be fitted thereinto and supports the communication device at a face position of the operable toy, and a transmission member configured to transmit, to a control unit mounted in the body portion, a signal output from the communication device supported by the head portion, where the control unit controls the operation of the limb attached to the body portion.

According to the present invention, an operable toy having high entertainability can be provided at low cost.

### BRIEF DESCRIPTION OF THE DRAWINGS

Fig. 1 is an external view of an operable toy according to an embodiment of the present invention;
Fig. 2 illustrates the operable toy with a mobile communication device attached thereto;
Fig. 3 illustrates movable parts of the operable toy;
Fig. 4 illustrates electrical connection between the mobile communication device and the operable toy;
Fig. 5 illustrates an exemplary functional configuration of the operable toy;
Fig. 6 illustrates an exemplary functional configuration of the mobile communication device;
Fig. 7 is a flowchart of the processing performed by the mobile communication device;
Figs. 8A to 8F illustrate examples of information displayed on a display unit of the mobile communication device by a display control program; and
Figs. 9A to 9C illustrate examples of the motion of the operable toy controlled by a motor drive control program.

### DESCRIPTION OF THE PREFERRED EMBODIMENTS

Exemplary embodiments of the present invention are described in detail below with reference to the accompanying drawings.

### First Exemplary Embodiment

### 1. Architecture of Operable Toy

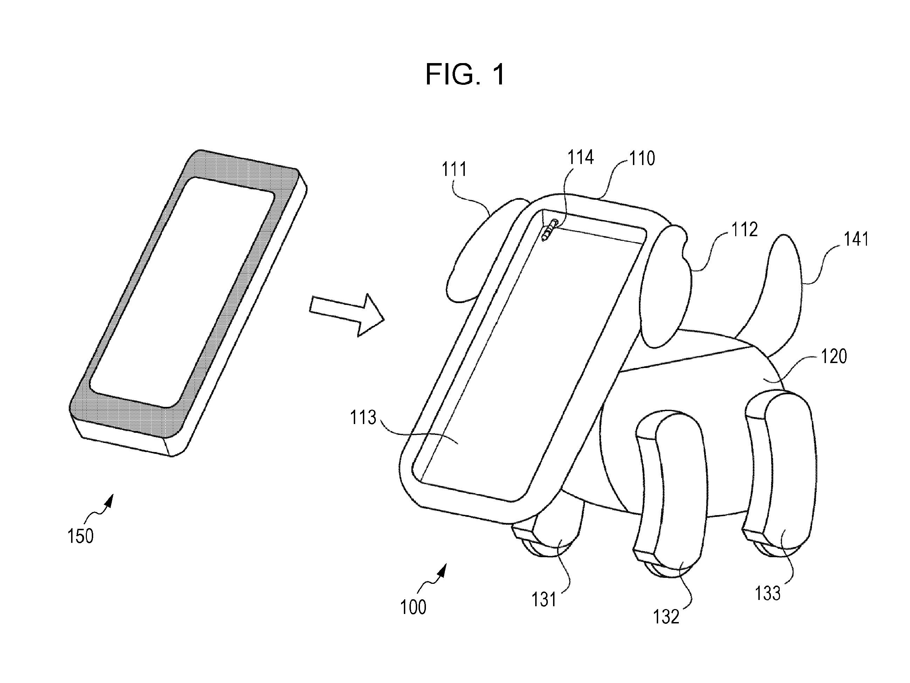

Fig. 1 illustrates the appearance of an operable toy 100 according to a first exemplary embodiment of the present invention. As illustrated in Fig. 1, according to the present exemplary embodiment, the operable toy 100 has the appearance of a dog. Note that the appearance of the operable toy 100 is not limited to a dog. For example, the operable toy 100 may have the appearance of another animal or a human.

As illustrated in Fig. 1, a head portion 110 includes a fitting unit 113 that allows a mobile communication device, such as a smartphone 150, to be fitted thereinto. In this way, by supporting the smartphone 150 at the place that becomes the face of the operable toy 100 so that the smartphone 150 serves as part of the head portion 110 (i.e., the face) of the operable toy 100, the user can easily operate the smartphone 150 even when the smartphone 150 is fitted into the fitting unit 113. As a result, the smartphone 150 can install, therein, an application that has high entertainability and that can control the operable toy 100 while interacting with the user.

While the present embodiment is described with reference to a mobile communication device, such as a smartphone, the present embodiment is applicable to any communication device that includes a display unit and is capable of outputting a signal for controlling the action of the operable toy or a signal for outputting sound from a sound output unit provided in the operable toy.

A side wall of the fitting unit 113 includes an earphone plug 114 that serves as a transmission member for transmitting a signal. If the smartphone 150 is fitted into the fitting unit 113, the smartphone 150 is electrically connected to the operable toy 100 via the earphone plug 114. Thus, signals can be communicated therebetween.

In addition, the outer side surface of the head portion 110 has a right ear portion 111 and a left ear portion 112 disposed thereon. The right ear portion 111 and the left ear portion 112 form the head of a dog together with a dog face image displayed on the display unit of the smartphone 150 fitted into the fitting unit 113.

A body portion 120 has limb portions (a right front leg portion 131, a left front leg portion 132, a right rear leg portion (not illustrated in Fig. 1), and a left rear leg portion 133) and a tail portion 141 connected thereto in a movable manner. Each of the leg portions 131 to 133 and the tail portion 141 is operated in accordance with a control signal transmitted from the smartphone 150. Each of the leg portions 131 to 133 attached to the body portion 120 has a wheel rotatably attached to the top end thereof. In this way, if the four leg portions are operated, the operable toy 100 can smoothly move on a floor.

Furthermore, a sound output unit, such as a speaker unit, (not illustrated) is provided in the body portion 120. Thus, sound is output from the sound output unit on the basis of a sound signal transmitted from the smartphone 150.

### 2. Architecture of Operable Toy with Mobile Communication Device

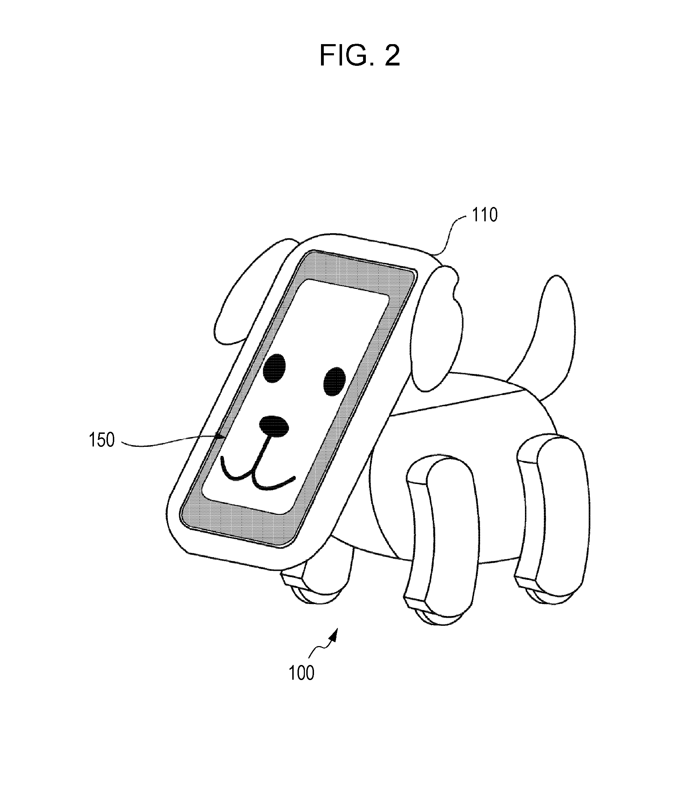

The architecture of the operable toy with a mobile communication device attached thereto is described next. Fig. 2 illustrates the operable toy 100 with the smartphone 150 attached thereto. As illustrated in Fig. 2, the smartphone 150 is fitted into the head portion 110 of the operable toy 100, and a predetermined operable toy operating application is started. Thus, a dog face image is displayed on the display unit of the smartphone 150 so that part of the dog face image adjacent to the earphone plug 114 represents the head edge of the dog and part of the dog face image on the opposite side represents the jaw of the dog. In this way, an operable toy dog is achieved.

### 3. Movable Parts

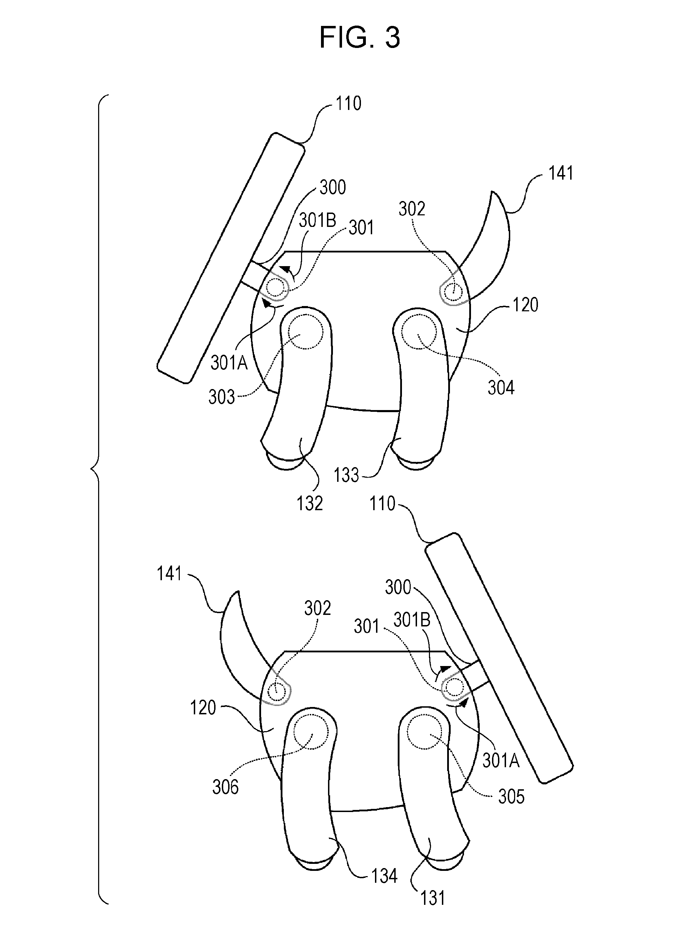

Movable parts of the operable toy 100 that move on the basis of a control signal transmitted from the smartphone 150 are described next. Fig. 3 is a side view of the operable toy 100 illustrating the movable parts of the operable toy 100.

As illustrated in Fig. 3, the head portion 110 is supported by a neck portion 300 from the back side. The neck portion 300 is rotatable about a rotation shaft 301 with respect to the body portion 120. By rotating the neck portion 300 about the rotation shaft 301 in a direction indicated by an arrow 301A at a predetermined angle, an upward facing toy dog can be achieved. In contrast, by rotating the neck portion 300 about the rotation shaft 301 in a direction indicated by an arrow 301B at a predetermined angle, a downward facing toy dog can be achieved.

The tail portion 141 is rotatable about a rotation shaft 302 with respect to the body portion 120. By reciprocally rotating the tail portion 141 about the rotation shaft 302 within a predetermined angle range, a toy dog wagging its tail can be achieved.

The left front leg portion 132 and the left rear leg portion 133 are rotatable about a rotation shaft 303 and a rotation shaft 304, respectively, with respect to the body portion 120. In addition, the right front leg portion 131 and a right rear leg 134 are rotatable about a rotation shaft 305 and a rotation shaft 306, respectively, with respect to the body portion 120.

By rotating the leg portions 131 to 134 about the rotation shafts 303 to 306, respectively, at predetermined angles, the toy dog can walk around or sit.

### 4. Electrical Connection between Mobile Communication Device and Operable Toy

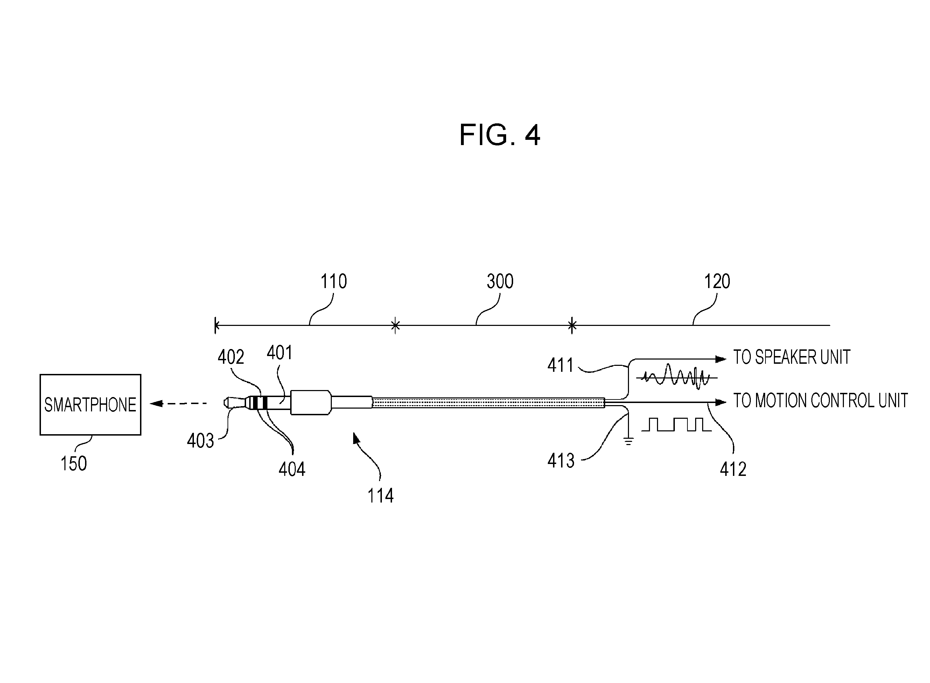

Electrical connection between the mobile communication device and the operable toy is described next. Fig. 4 illustrates an interface for electrically connecting the smartphone 150 to the operable toy 100. As illustrated in Fig. 4, the smartphone 150 is connected to the operable toy 100 using an interface known as an "earphone plug" 114. In this way, by using the earphone plug 114 in order to connect the smartphone 150 to the operable toy 100, the operable toy 100 can be produced at low cost, as compared with an existing operable toy that allows connection via an external communication connector.

The earphone plug 114 extends from a signal receiving unit (described in more detail below) of the body portion 120 to the head portion 110 through the neck portion 300. The top end of the earphone plug 114 is exposed to the outside through an upper side wall of the fitting unit 113 of the head portion 110 (refer to Fig. 1).

The earphone plug 114 has a three or more prong connector at the top end thereof. In general, the earphone plug 114 includes a sleeve portion 401 for earthing, a ring portion 402 used for a sound signal for a right channel, and a tip portion 403 used for a sound signal for a left channel. The sleeve portion 401, the ring portion 402, and the tip portion 403 are electrically insulated from one another by insulating rings 404.

According to the present exemplary embodiment, the operable toy 100 uses one of the ring portion 402 used for a sound signal for a right channel and the tip portion 403 used for a sound signal for a left channel for transmitting a sound signal. In addition, the operable toy 100 uses the other ring portion for transmitting a control signal used for rotational motions about the rotation shafts. Note that hereinafter, for convenience of description, the other ring portion is used for transmitting the control signal used for rotating the tip portion 403 about the rotation shaft.

An interconnection line 411 (a first transmission path) is connected to the ring portion 402. The interconnection line 411 transmits a sound signal (an analog signal) output from the smartphone 150 to a sound output unit (e.g., a speaker unit) of the body portion 120. An interconnection line 412 (a second transmission path) is connected to the tip portion 403. The interconnection line 412 transmits a control signal (e.g., a pulse signal) output from the smartphone 150 to a motion control unit (described in more detail below) in the body portion 120. An interconnection line 413 is connected to the sleeve portion 401. The interconnection line 413 is grounded to the body portion 120.

According to the present exemplary embodiment, the operable toy 100 outputs different signals from a right-channel sound signal output terminal and a left-channel sound signal output terminal of the earphone plug. Thus, the configuration of the operable toy 100 can be simplified, as compared with the configuration in which a single signal is output from the earphone plug and the operable toy 100 includes a control unit for separating the signal into a sound signal for outputting sound and a control signal for controlling the operation of the operable toy. Therefore, according to the present exemplary embodiment, the circuit configuration of the operable toy 100 can be simplified and, thus, the manufacturing cost can be reduced.

While the present exemplary embodiment has been described with reference to the right-channel sound signal output terminal and the left-channel sound signal output terminal of the earphone plug for outputting a sound signal and a control signal, the output signals are not limited thereto. Appropriate signals may be output in accordance with the operation of the operable toy 100. For example, if the operable toy 100 includes the sound output unit and a light emitting unit, operation signals for the sound output unit and the light emitting unit may be output from the right-channel sound signal output terminal and the left-channel sound signal output terminal of the earphone plug. Alternatively, if the operable toy 100 includes the light emitting unit and a drive mechanism for driving, for example, four limbs of a toy body, operation signals for the light emitting unit and the drive mechanism may be output from the right-channel sound signal output terminal and the left-channel sound signal output terminal of the earphone plug.

### 5. Functional Configuration of Operable Toy

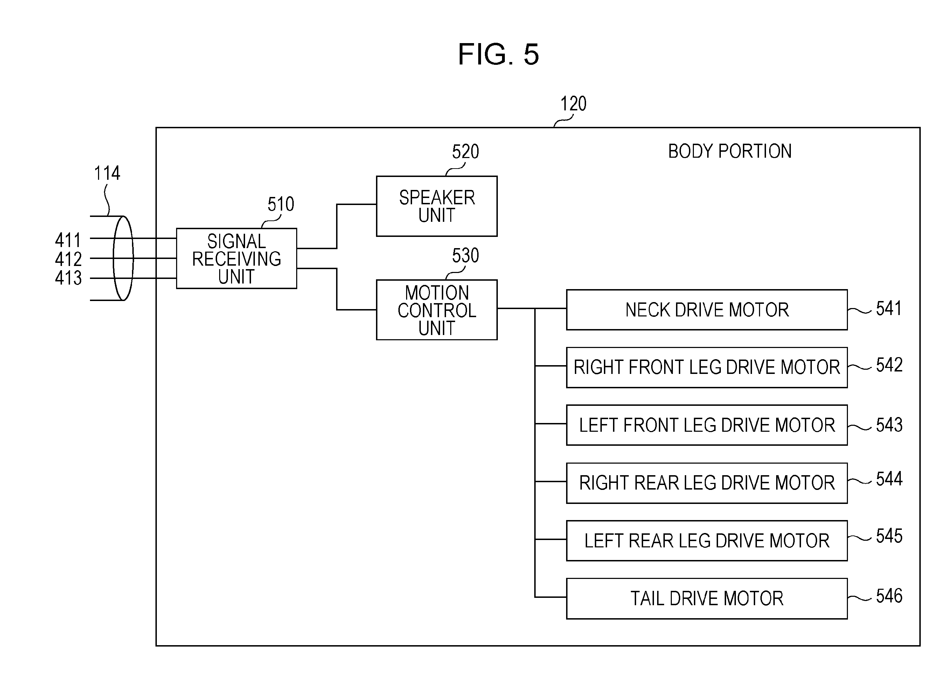

An exemplary functional configuration inside the body portion 120 of the operable toy 100 is described next. Fig. 5 illustrates an exemplary functional configuration of the body portion 120 of the operable toy 100. As illustrated in Fig. 5, a signal receiving unit 510 is connected to the earphone plug 114.

The signal receiving unit 510 receives a sound signal transmitted from the smartphone 150 and transmits the sound signal to a speaker unit 520 via the interconnection line 411. In addition, the signal receiving unit 510 receives a control signal transmitted from the smartphone 150 and transmits the control signal to a motion control unit 530 via the interconnection line 412. Furthermore, the signal receiving unit 510 connects the interconnection line 413 to ground.

The speaker unit 520 outputs sound on the basis of the sound signal transmitted from the signal receiving unit 510. The motion control unit 530 identifies some of the portions to be moved and the type of the motion on the basis of the control signal transmitted from the signal receiving unit 510. In addition, the motion control unit 530 outputs a drive signal to an actuation motor for the portion to be moved in order to drive the portion in accordance with the identified type of motion.

A variety of drive motors are connected to the motion control unit 530. A neck drive motor 541 rotates the neck portion 300 about the rotation shaft 301. A right front leg drive motor 542 rotates the right front leg portion 131 about the rotation shaft 305. A left front leg drive motor 543 rotates the left front leg portion 132 about the rotation shaft 303.

In addition, a right rear leg drive motor 544 and a left rear leg drive motor 545 rotate the right rear leg 134 and the left rear leg portion 133 about the rotation shaft 306 and the rotation shaft 304, respectively. Furthermore, a tail drive motor 546 rotates the tail portion 141 about the rotation shaft 302.

### 6. Functional Configuration of Mobile Communication Device

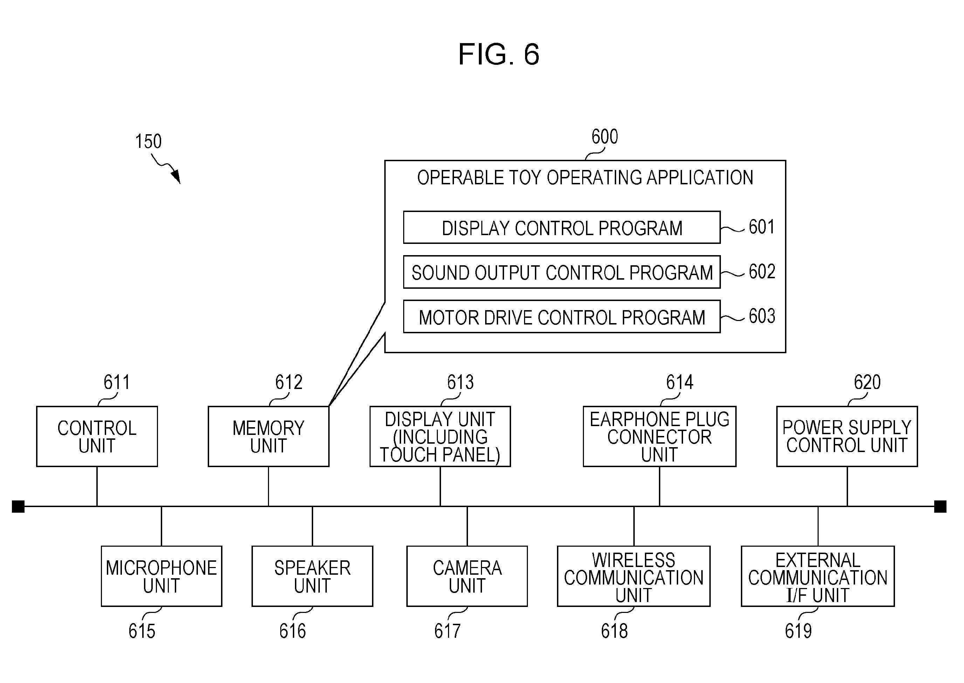

An exemplary functional configuration of the mobile communication device is described next. Fig. 6 illustrates an exemplary functional configuration of the smartphone 150. As illustrated in Fig. 6, the smartphone 150 includes a control unit (a computer) 611, a memory unit 612, a display unit 613, an earphone plug connector unit 614, a microphone unit 615, a speaker unit 616, a camera unit 617, a wireless communication unit 618, an external communication interface (I/F) unit 619, and a power supply control unit 620.

The control unit 611 reads a variety of programs and data stored in the memory unit 612 and performs processing. Thus, the operable toy operating function (described in more detail below) can be realized.

The memory unit 612 stores an operable toy operating application 600 for realizing the operable toy operating function. The operable toy operating application 600 includes a display control program 601 for controlling an image displayed on the display unit 613, a sound output control program 602 for controlling sound output from the speaker unit 520 of the operable toy 100, and a motor drive control program 603 for outputting a control signal to the motion control unit 530 of the operable toy 100.

Under the control of the display control program 601, the display unit 613 displays a variety of images. Note that the display unit 613 has a touch panel function. By directly touching the display unit 613, the user can input a variety of instructions.

Normally, the earphone plug connector unit 614 has an earphone plug connected thereto, and the earphone plug connector unit 614 outputs a sound signal (a stereo signal) to the earphone plug connected thereto. Note that according to the present exemplary embodiment, when the earphone plug 114 is connected and if the operable toy operating application 600 has been started, the earphone plug connector unit 614 outputs a sound signal and a control signal.

The microphone unit 615 detects user's voice. Normally, the microphone unit 615 is used to conduct a telephone conversation. Note that when the operable toy operating application 600 is running, the microphone unit 615 is used to detect a voice instruction output from the user.

The speaker unit 616 is used to output sound if the earphone plug connector unit 614 does not have the earphone plug connected thereto. Normally, the speaker unit 616 is used by the user to listen to music or to conduct a telephone conversation.

The camera unit 617 is used to capture a still image or a moving image. Note that according to the present exemplary embodiment, the camera unit 617 can be operated even when the operable toy operating application 600 is running. In such a case, a still image or a moving image captured by the camera unit 617 can be processed. Thereafter, in accordance with the result of processing, an image displayed on the display unit 613 can be changed, the sound signal output to the speaker unit 520 of the operable toy 100 can be changed, and the control signal output to the motion control unit 530 of the operable toy 100 can be changed.

The wireless communication unit 618 is used to perform wireless communication with an external device, such as telephone conversation and e-mail communication. Note that when the operable toy operating application 600 is running and if the wireless communication unit 618 detects a telephone call or e-mail reception, an image displayed on the display unit 613 can be changed, the sound signal output to the speaker unit 520 of the operable toy 100 can be changed, and the control signal output to the motion control unit 530 of the operable toy 100 can be changed.

The external communication I/F unit 619 is used to set a communication cable between the external communication I/F unit 619 and an external device in order to perform wired communication with the external device. Note that as described above, the sound signal and the control signal are output to the operable toy 100 via the earphone plug connector unit 614. Thus, the external communication I/F unit 619 is not used to output the sound signal and the control signal.

The power supply control unit 620 has a function of managing an internal battery (not illustrated) that supplies electric power to each unit of the smartphone 150. The power supply control unit 620 can monitor the battery level of the internal battery. Note that when the operable toy operating application 600 is running and if the power supply control unit 620 detects that the battery level reaches a predetermined value or lower, that information can be added to a control signal output to the motion control unit 530. In this way, the motion of the operable toy 100 can be changed.

### 7. Process Flow of Mobile Communication Device

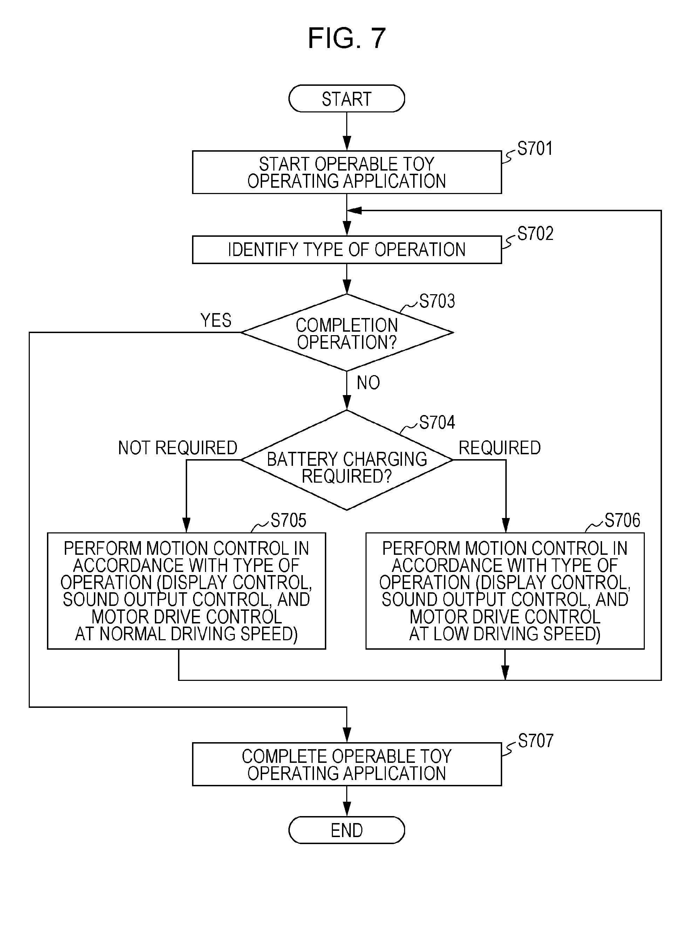

An exemplary process flow of the mobile communication device is described next. Fig. 7 is a flowchart of the processing performed by the smartphone 150 when the operable toy 100 is operated using the smartphone 150.

As illustrated in Fig. 7, the processing is started after the earphone plug 114 is connected to the smartphone 150, the smartphone 150 is fitted into the head portion 110 of the operable toy 100, and the smartphone 150 is powered on.

In step S701, upon receiving an instruction from the user, the operable toy operating application 600 is started. In step S702, the type of an instruction input from the user through the touch panel function of the display unit 613 is identified.

In step S703, it is determined whether the instruction input in step S702 indicates that the operable toy operating application 600 is to be completed. If, in step S703, it is determined that the instruction indicates that the operable toy operating application 600 is to be completed, the processing proceeds to step S707, where the operable toy operating application 600 is completed.

However, if it is determined that the instruction input in step S702 is not an instruction indicating that the operable toy operating application 600 is to be completed, the processing proceeds to step S704.

In step S704, it is determined whether the battery level of the internal battery detected by the power supply control unit 620 of the smartphone 150 has reached a predetermined value or lower. If, in step S704, it is determined that the battery level of the internal battery is not lower than or equal to the predetermined value, the processing proceeds to step S705, where control is performed so that the operation indicated by the instruction input in step S702 is performed. More specifically, a face image corresponding to the type of instruction is displayed on the display unit 613, a sound signal corresponding to the type of instruction is output to the operable toy 100, or a control signal corresponding to the type of instruction is output to the operable toy 100.

However, if, in step S704, it is determined that the battery level of the internal battery is lower than or equal to the predetermined value, the processing proceeds to step S706. In step S706, control is performed so that the operation indicated by the instruction input in step S702 is performed. In addition, when a control signal corresponding to the type of instruction is output to the operable toy 100, a control signal indicating that the battery level of the internal battery is lower than or equal to the predetermined value is also output to the operable toy 100. In this way, upon receiving the control signals, the operable toy 100 can control the drive motors 541 to 546 so that the drive motors 541 to 546 operate at a speed that is lower than the normal operating speed.

As described above, if the battery level of the internal battery becomes low, the seed at which the operable toy 100 operates is decreased. Thus, the user views the operable toy 100 moving at low speed (i.e., a slow, sleepy, inactive dog) and is aware that charging of the internal battery of the smartphone 150 is needed.

After control is performed so that a motion corresponding to the type of instruction is performed in step S705 or S706, the processing returns to step S702, where the smartphone 150 waits for the user's next instruction.

By repeating the above-described processing, the user can consider the operable toy 100 as a pseudo-pet.

### 8. Examples

Examples of a face image displayed on the display unit 613 of the smartphone 150 and exemplary operations performed by the operable toy 100 in accordance with the flowchart illustrated in Fig. 7 when the operable toy operating application 600 is running are described next.

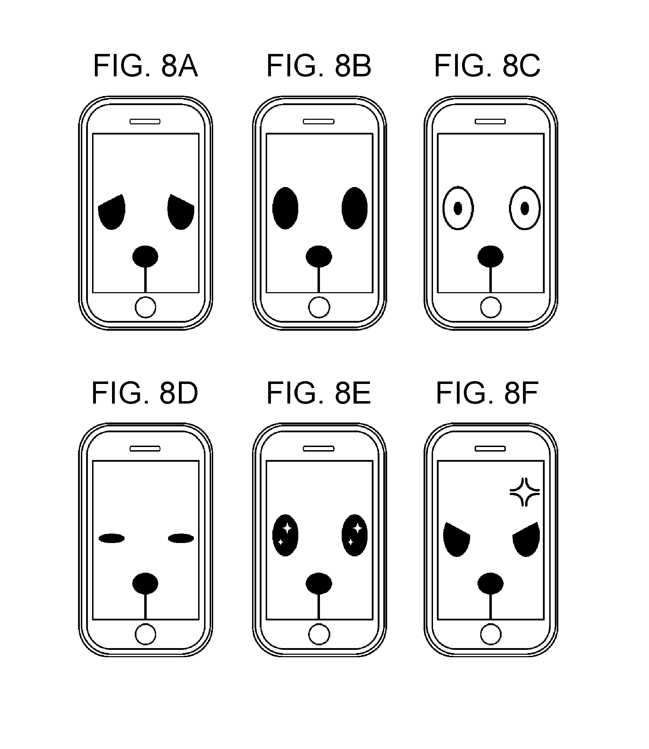

Figs. 8A to 8F illustrate examples of the face image displayed on the display unit 613 of the smartphone 150. As illustrated in Figs. 8A to 8F, the smartphone 150 can display a variety of images representing the following facial expressions of the dog: a troubled face (refer to Fig. 8A), a normal face (refer to Fig. 8B), an astonished face (refer to Fig. 8C), a straight face (refer to Fig. 8D), an excited face (refer to Fig. 8E), and an angry face (refer to Fig. 8F) .

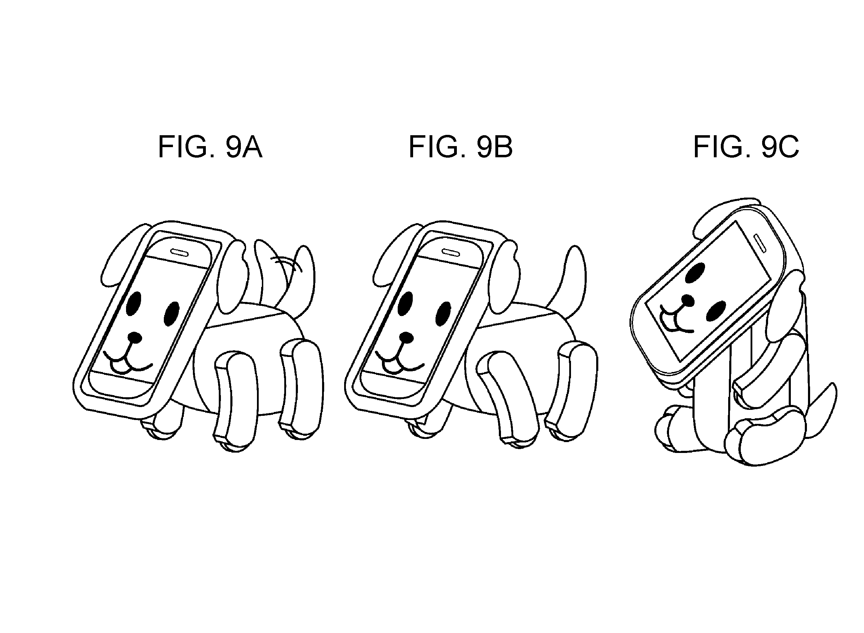

Figs. 9A to 9C illustrate examples of the motion of the operable toy 100. As illustrated in Figs. 9A to 9C, examples of the motion of the dog include wagging it's tail (refer to Fig. 9A), walking around (refer to Fig. 9B), and sitting (refer to Fig. 9C).

In addition, each of the facial expressions can be combined with each of the motions. Furthermore, by combining an output sound suited for the each of the facial expressions and the motions, the operable toy having higher entertainability can be provided to users.

As can be seen from the above descriptions, the operable toy according to the present exemplary embodiment has a configuration in which a mobile communication device is supported at the position of the face so as to form part of the head portion. In this way, even when the mobile communication device is attached to the operable toy, the user can easily operate the mobile communication device and, therefore, an interactively operable toy having high entertainability can be provided to users.

Furthermore, according to the present exemplary embodiment, the operable toy receives a signal from the mobile communication device via the earphone plug connector unit of the mobile communication device. Accordingly, the operable toy can be manufactured at low cost, as compared with an existing operable toy that allows connection via a dedicated external communication connector.

That is, an operable toy having high entertainability can be realized at low cost.

### Second Exemplary Embodiment

While the first exemplary embodiment has been described with reference to the operation performed by the operable toy 100 in accordance with the user's instruction (refer to Fig. 7), the present invention is not limited thereto. For example, the operable toy 100 may be operated in accordance with the result of the processing performed by the wireless communication unit 618 (e.g., an incoming call to the wireless communication unit 618 or reception of an e-mail). Alternatively, the camera unit 617 may be activated and, thereafter, the operable toy 100 may be operated in accordance with the result of the processing of a still image or a moving image captured by the camera unit 617. In such a case, in step S702 illustrated in Fig. 7, a process for identifying an incoming call and reception of an e-mail or a process for identifying the result of the processing of a still image or a moving image captured by the camera unit 617 is performed.

## Claims

1. An operable toy having a particular shape including the shape of a dog or a human, comprising:
a body portion (120) having a limb movably attached thereto;
a head portion (110) supported by a neck portion (300) movably attached to the body portion (120), the head portion (110) allowing a communication device including a display unit to be fitted thereinto and supporting the communication device at a face position of the operable toy; and
a transmission member (114) configured to transmit, to a control unit mounted in the body portion (120), a signal output from the communication device supported by the head portion (110), the control unit controlling the operation of the limb attached to the body portion (120).

2. The operable toy according to Claim 1, further comprising:
a sound output unit configured to output sound on the basis of a signal output from the communication device;
wherein the transmission member (114) is an earphone plug having at least two transmission paths including first and second transmission paths, and wherein a signal transmitted via the first transmission path is input to the sound output unit, and a signal transmitted via the second transmission path is input to the control unit.

3. The operable toy according to Claim 2, wherein the earphone plug transmits, to the sound output unit, a signal output from the communication device via a ring portion, and the earphone plug transmits, to the control unit, a signal output from the communication device via a tip portion.

4. The operable toy according to any one of Claims 1 to 3, wherein if the communication device transmits a signal indicating that a battery level of an internal battery of the communication device reaches a predetermined value or lower, the control unit reduces an operating speed of the limb and operates the limb.

5. The operable toy according to any one of Claims 2 to 4, wherein a face image corresponding to at least one of a sound output from the sound output unit and a type of motion of the limb controlled by the control unit is displayed on the display unit of the communication device.

6. The operable toy according to any one of Claims 1 to 5, wherein the signal is output from the communication device in accordance with an instruction input to the communication device by a user.

7. The operable toy according to any one of Claims 1 to 5, wherein the signal is output from the communication device in accordance with one of a speech sound input to the communication device and an image captured by the communication device.

8. The operable toy according to any one of Claims 1 to 5, wherein the communication device further includes a wireless communication unit, and wherein the signal is output from the communication device on the basis of a result of processing performed by the wireless communication unit.

9. A program comprising:
program code for causing a computer included in the communication device connected to the operable toy according to any one of Claims 1 to 3 via the transmission member (114) to execute a control method, the control method comprising displaying a face image corresponding to at least one of a sound output from the sound output unit and a type of motion of the limb controlled by the control unit, outputting the signal from the communication device in accordance with an instruction input to the communication device, and outputting the signal from the communication device in accordance with one of a speech sound input to the communication device and an image captured by the communication device.

10. The program according to Claim 9, wherein the control method further comprises outputting a signal indicating that a battery level of an internal battery of the communication device reaches a predetermined value or lower.
